# EUROPÄISCHE PATENTSCHRIFT

(11) **EP 0 532 471 B1**
(45) Veröffentlichungstag und Bekanntmachung des Hinweises auf die Patenterteilung: **17.05.1995**
(21) Anmeldenummer: 92810693.9
(22) Anmeldetag: 10.09.1992
(51) Int. Cl.: B65D 47/08

(54) **Verschluss aus Kunststoff für einen Behälter**
Plastic closure for container
Dispositif de fermeture en matière plastique pour récipient

(30) Priorität: 10.09.1991 CH 2658/91
(43) Veröffentlichungstag der Anmeldung: 17.03.1993
(73) Patentinhaber: Creanova AG, c/o Dr. Rolf Ferber Verwaltungen, CH-6340 Baar (CH)
(72) Erfinder: Brach, Ulrich, W-5580 Traben-Trarbach (DE); Thanisch, Klaus, W-5584 Bullay (DE)
(74) Vertreter: Münch, Otto

(56) Entgegenhaltungen:
- EP-A- 0 011 822
- EP-A- 0 056 469
- EP-A- 0 309 396
- DE-A- 3 909 385
- FR-A- 2 309 425
- US-A- 4 793 501
- US-A- 5 007 555

## Beschreibung

Die Erfindung betrifft einen Verschluss nach dem Oberbegriff des Anspruchs 1.

Flaschenverschlüsse werden in vielen Varianten spritzgegossen. Das EP-Patent Nr. 0 056 469, gegenüber welchem der Anspruch 1 abgegrenzt ist, beschreibt solche einstückigen Verschlüsse mit Schnappscharnieren, die sich sehr bewährt haben. Durch die FR-2 309 425 ist ein Verschluss aus Kunststoff bekannt, der ähnlich ausgebildet ist, der jedoch kein Schnappscharnier aufweist. Der vorliegenden Erfindung liegt die Aufgabe zugrunde, einen gattungsgemässen Verschluss mit Schnappscharnier zu schaffen, der preiswerter herstellbar und zudem sicher und einfach zu handhaben ist. Die Aufgabe ist durch die Erfindung gemäss Anspruch 1 gelöst.

Die bekannten Verschlüsse der eingangs genannten Art werden im um 180° geöffneten Zustand spritzgegossen. Die Oeffnung um volle 180° ist erforderlich, um eine einfache Entformung ohne Querzüge zu erreichen. Die Negativformen der Innenkontur von Deckel und Unterteil liegen also in der einen Formhälfte der Spritzgiessform nebeneinander. Die Scharniere müssen so gewählt werden, dass sie eine Oeffnung um 180° erlauben, einen Oeffnungswinkel, der üblicherweise nachher im Betrieb gar nicht vorkommt.

Beim erfindungsgemässen Verschluss ist ein Verfahren möglich, bei dem in Abkehr von der üblichen Herstellungsweise der Verschluss im geschlossenen Zustand im Spritzgussverfahren herstellbar ist. Dies bringt eine ganze Reihe bemerkenswerter Vorteile:
Die Querschnittsfläche auf den Spritzgiessformhälften wird auf etwas weniger als die Hälfte reduziert, so dass auf der gleichen Spritzgiesspresse pro Takt doppelt soviele Verschlüsse hergestellt werden können als mit herkömmlichen Verfahren und herkömmlichen Werkzeugen. Weil die Verschlüsse nach dem Spritzgiessen bereits verschlossen sind, entfällt die bei herkömmlichen Verschlüssen erforderliche gesonderte Schliessoperation. Die erfindungsgemässen Verschlüsse können aus obigen Gründen wesentlich kostengünstiger hergestellt werden.

Weil der Verschluss im geschlossenen Zustand spritzgegossen wird, ist es auf einfache Weise möglich, ihn "tamper-proof", d.h. sicher gegen unbemerktes vorzeitiges Oeffnen auszubilden, indem zwischen Deckel und Unterteil beabstandet vom Schnappscharnier Sollbruchstege ausgebildet werden. Diese Sollbruchstege tragen zum Befüllen des Formhohlraumes beim Spritzgiessen bei.

Bei diesem Verfahren ist es im Gegensatz zu bekannten Verschlüssen nicht erforderlich, dass der Deckel gegenüber dem Unterteil um 180° aus der Schliessstellung verschwenkbar sein muss.

Nachfolgend werden Ausführungsbeispiele der Erfindung anhand der Zeichnung erläutert.

Darin zeigt:
- Fig. 1: einen Axialschnitt durch einen Flaschenverschluss,

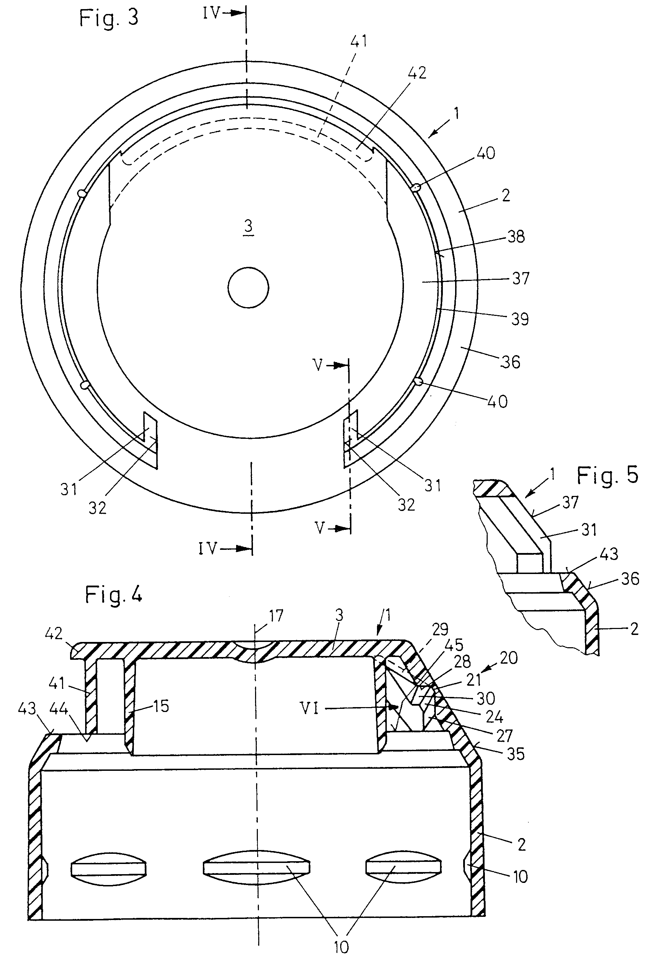

- Fig. 2 und Fig. 3: Ansichten in Richtung der Pfeile II bzw. III in Fig. 1,
- Fig. 4 und Fig. 5: Schnitte längs den Linien IV - IV bzw. V - V in Fig. 3,
- Fig. 6: eine Ansicht in Richtung des Pfeils VI in Fig. 4 in vergrössertem Massstab,
- Fig. 7: einen Schnitt längs der Linie VII - VII in Fig. 6,
- Fig. 8: einen schematischen Axialschnitt durch einen Teil einer Spritzgiess-Formhälfte, und
- Fig. 9 und Fig. 10: zwei Varianten.

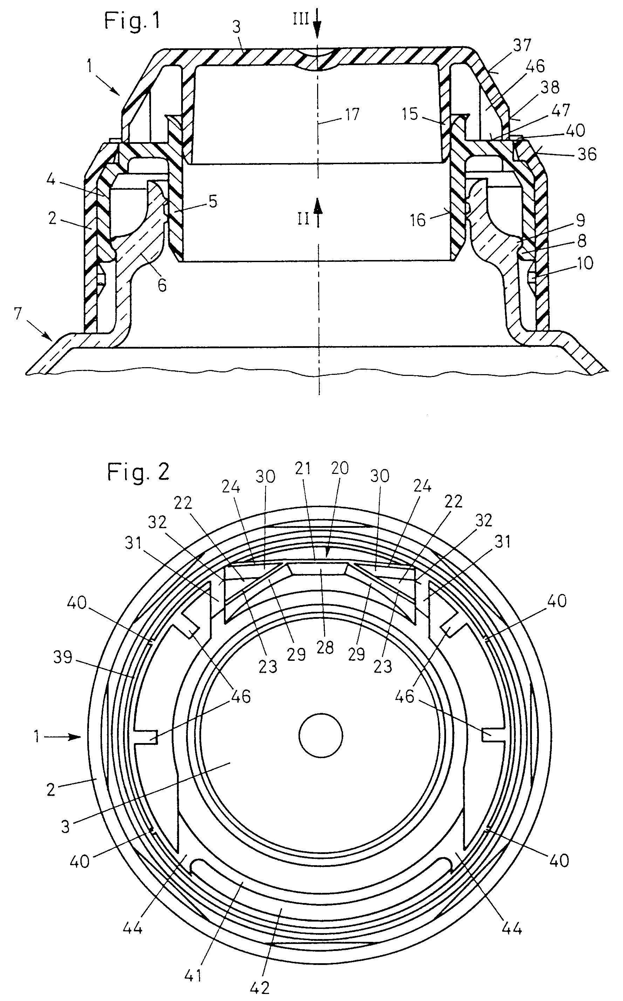

Der Flaschenverschluss 1 nach Fig. 1 ist einstückig aus Kunststoff, z.B. aus Polypropylen, spritzgegossen und besteht aus einem rohrförmigen Unterteil 2 und einem Deckel 3. Im Unterteil 2 ist ein Einsatz 4 eingeschnappt, der mit einem zylindrischen Ansatz 5 abdichtend in den zylindrischen Hals 6 einer Flasche 7 eingesteckt ist. Mittels eines umlaufenden Nockens 8 ist der Einsatz 4 auf einen Wulst 9 des Flaschenhalses 6 aufgeschnappt. Haltenocken 10 des Unterteils 2 halten den Einsatz 4 im Unterteil 2. In der dargestellten Ausführungsform dichtet ein kreiszylindrischer, rohrförmiger Ansatz 15 des Deckels 3 gegen eine zylindrische Innenfläche 16 des Einsatzes 4 ab. Fläche 16 und Ansatz 15 sind koaxial zur Hauptachse 17 des rohrförmigen Unterteils 2.

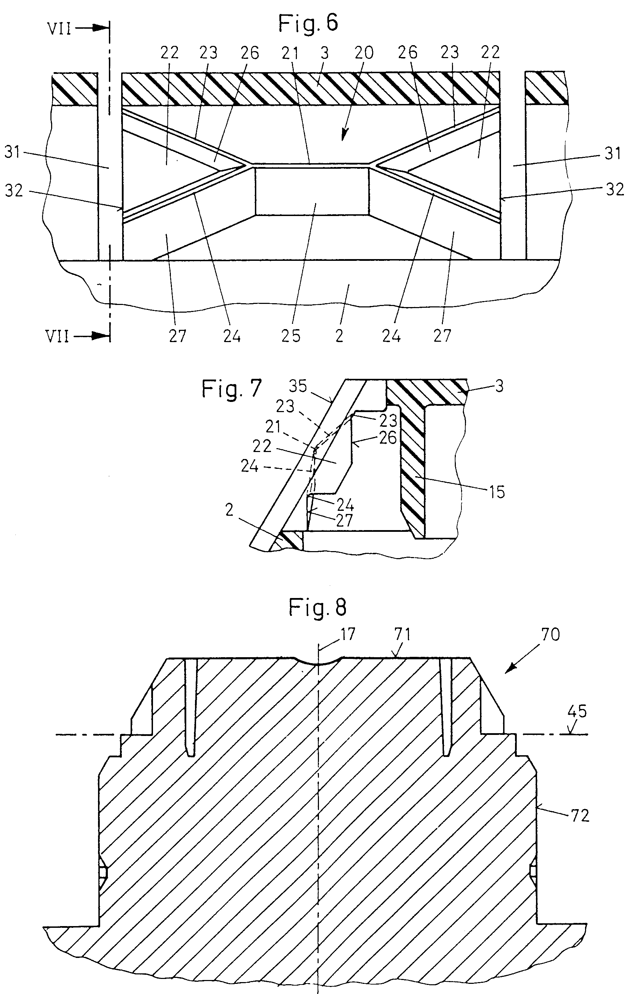

Der Deckel 3 ist mit dem Unterteil 2 durch ein Schnappscharnier 20 verbunden. Dieses besteht aus einer den Deckel 3 mit dem Unterteil 2 direkt verbindenden, senkrecht zur Hauptachse 17 des Unterteils (2) verlaufenden, die Hauptdrehachse des Verschlusses 1 definierenden Hauptbiegestelle 21 und zwei beidseits davon angeordneten Zwischenelementen 22, die je über zwei Nebenbiegestellen 23, 24 mit dem Unterteil 2 bzw. dem Deckel 3 verbunden sind. Die Hauptbiegestelle 21 und die Nebenbiegestellen 23, 24 sind zweckmässig als Filmscharniere ausgebildet und sind vorzugsweise alle geradlinig. Im dargestellten Ausführungsbeispiel sind die Zwischenelemente 22 dreieckförmige Zugelemente. Ihre Spitzen sind gegeneinander gekehrt und fallen mit den Enden der Hauptbiegestelle 21 zusammen. In der Schliessstellung steht die durch die Nebenbiegestellen 23, 24 ein und desselben Zwischenelementes 22 definierte Ebene schief sowohl zur Hauptbiegestelle 21 als auch zur Achse 17. Dadurch wird ermöglicht, dass die Axialschnitte im Bereich des Schnappscharniers 20 so gestaltet werden können, dass trotz der für die Biegestellen 21, 23, 24 zweckmässigen schmalbandigen Dünnstellen die in Fig. 8 bloss angedeutete Formhälfte 70 zur Bildung der Innenwand des Formhohlraumes der Spritzgiessform in Richtung der Achse 17 entformt werden kann. Die Hauptbiegestelle 21 und die Nebenbiegestellen 23, 24 sind auf einer annähernd kegelförmigen oder zylinderförmigen Fläche angeordnet, deren Erzeugende mit der Achse 17 einen spitzen Winkel von vorzugsweise mehr als 20° bilden. An die Biegestellen 21, 23, 24 schliessen nach unten, also in Entformungsrichtung, ebene Flächen 25, 26, 27 parallel zur Achse 17 an. Die auf den gegenüberliegenden Seiten anschliessenden Flächen 28, 29, 30 verlaufen dagegen annähernd radial zur Achse 17. Beidseits des Schnappscharniers 20 ist im Deckel 3 je ein Einschnitt 31 vorhanden. Die Zwischenelemente 22 haben gegen diesen Einschnitt 31 einen freien Rand 32.

Die annähernd konische Aussenfläche 35 des Schnappscharniers 20 setzt sich in Umfangsrichtung nach den Einschnitten 31 als konische Endfläche 36 des Unterteils 2 und als Konus 37 des Deckels 3 fort. Der Deckel 3 hat an seiner Peripherie ausgehend von den Einschnitten 31 anschliessend an den Konus 37 eine Zylinderfläche 38, deren Durchmesser geringer ist als der kleinste Innendurchmesser des Unterteils 2. Der dadurch gebildete schmale Spalt 39 ist an mehreren Stellen beabstandet vom Hauptscharnier 21 durch Sollbruchstege 40 überbrückt. Diametral gegenüber dem Schnappscharnier 20 geht der Konus 37 des Deckels 3 in eine radial einwärts versetzte zylindrische Wand 41 über, so dass dort ein Griffansatz 42 gebildet ist. Die obere Stirnfläche 43 des Unterteils 2 und die untere Stirnfläche 44 der Aussenbereiche des Deckels 3 liegen in einer gemeinsamen Ebene 45.

Der untere Teil des Konus 37 sowie der zylindrische Abschnitt 38 des Deckels 3 sind durch mehrere radiale Rippen 46 versteift, welche ebenfalls mit der Stirnfläche 44 bündig sind. Mit dieser Stirnfläche 44 stützen sich die Rippen 46 im Schliesszustand auf einer ebenen Stirnfläche 47 des Einsatzes 4 ab (Fig. 1), um die Aufprellkräfte und Belastungen des Deckels 3 auf den Einsatz 5 zu übertragen.

Wie aus Fig. 2 ersichtlich ist, ist der Aussendurchmesser des Deckels 3 um die doppelte Breite des Spaltes 39 geringer als der kleinste Innendurchmesser des Unterteils 2.

In Fig. 8 ist eine Formhälfte 70 einer Spritzgiessform ausschnittweise schematisch dargestellt. Der gezeigte Ausschnitt bildet bei zusammengefügter Form im Formhohlraum oberhalb der Trennebene 45 eine Wand 71 zur Bildung der Innenkontur des Deckels 3 und unterhalb der Trennebene 45 eine Wand 72 zur Bildung der Innenkontur des Unterteils 2. Die beiden Wände 71, 72 sind koaxial zueinander und zur Achse 17. In der Projektion parallel zur Achse 17 liegt die Wand 71 vollständig innerhalb der Wand 72.

Der beschriebene Verschluss 1 eignet sich sehr gut zur rationellen maschinellen Montage auf Flaschenhälsen 6. Er ist "tamper-proof", d.h. der Endabnehmer kann sofort feststellen, wenn der Verschluss 1 nach Aufsetzen auf die Flasche 7 geöffnet wurde, indem dann die Sollbruchstege 40 gebrochen sind. Beim ersten Oeffnen werden also zunächst diese Sollbruchstege 40 gebrochen. Dies ist spür- und hörbar. Beim weiteren Oeffnen werden die Zugelemente 22 gespannt, und auf die Wände von Unterteil 2 und Deckel 3 benachbart den Biegestellen 21, 23, 24 werden Druck- bzw. Zugkräfte übertragen, die wegen der exzentrischen Krafteinleitung zu einer elastischen Biegung dieser Verschlussteile führen. Sobald ein Totpunkt, in welchem sämtliche Biegestellen 21, 23, 24 in einer gemeinsamen Ebene liegen, überschritten wird, schnappt der Deckel in die geöffnete Stellung. Der beschriebene Verschluss 1 eignet sich bei entsprechender Anpassung auch für andere als kreisrunde, z.B. für ovale Behälteröffnungen. Der Einsatz 4 kann bei entsprechender Anpassung des Halses 6 der Flasche 7 auch weggelassen werden. Statt des beschriebenen Schnappscharniers 20, das eine ästhetisch besonders ansprechende Lösung darstellt, sind auch andere Scharnierausbildungen anwendbar, z.B. Schnappscharniere, bei welchen die Nebenscharniere parallel zum Hauptscharnier sind und/oder bei welchen die Zwischenelemente Biegefedern sind.

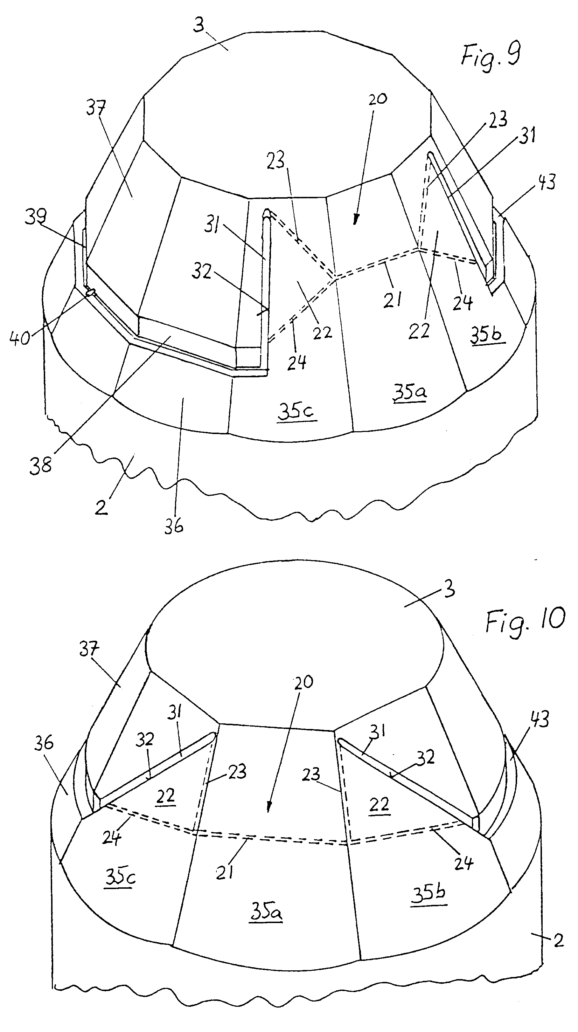

In Fig. 9 und 10 sind zwei Ausführungsbeispiele dargestellt, bei welchen das Schnappscharnier 20 auf ebenen, zueinander abgewinkelten Flächen, z.B. auf aneinandergrenzenden Flächen 35a, 35b und 35c eines Pyramidenstumpfes ausgebildet ist. Dadurch können die Biegestellen 21, 23, 24 exakt geradlinig ausgebildet werden. Wie Fig. 10 zeigt, können die Schlitze 31 auch windschief zur Hauptachse 17 des Unterteils (2) verlaufen und die Zwischenelemente 22 asymmetrisch zu der durch die Hauptbiegestelle 21 definierten Hauptachse angeordnet sein. Dadurch kann bei vorgegebenem Totpunktwinkel die Zugbelastung der Zwischenelemente 22 reduziert werden.

## Patentansprüche

1. Verschluss aus Kunststoff für einen Behälter, insbesondere für eine Flasche, umfassend einen Unterteil (2) zum Aufsetzen auf einen Hals (6) des Behälters (7) und einen über ein Schnappscharnier (20) einstückig damit verbundenen Deckel (3), wobei das Schnappscharnier (20) eine den unterteil (2) mit dem Deckel (3) direkt verbindende Hauptbiegestelle (21), welche die Hauptdrehachse des Verschlusses definiert und beidseits der Hauptbiegestelle (21) je ein Zwischenelement (22) hat, wobei die Zwischenelemente (22) über je eine Nebenbiegestelle (23, 24) mit Unterteil (2) und Deckel (3) verbunden sind, dadurch gekennzeichnet, dass im geschlossenen Zustand des Verschlusses sowohl die Hauptbiegestelle (21) als auch sämtliche Nebenbiegestellen (23, 24) in einer nach innen oben hin gegenüber der Hauptachse (17) des Unterteils (2) geneigten Fläche (35; 35a, 35b, 35c) angeordnet sind, und dass die durch die Nebenbiegestellen (23, 24) ein und desselben Zwischenelementes (22) definierte Fläche sowohl zur Hauptbiegestelle (21) als auch zur Hauptachse (17) des Unterteils (2) schief steht.

2. Verschluss nach Anspruch 1, dadurch gekennzeichnet, dass die Fläche (35;35a,35b,35c) annähernd kegel- oder pyramidenförmig ist.

3. Verschluss nach Anspruch 1 oder 2, dadurch gekennzeichnet, dass im geschlossenen Zustand in Achsrichtung des Verschlusses betrachtet die Aussenkontur des Deckels (3) vollständig innerhalb der Innenkontur des Unterteils (2) ist.

4. Verschluss nach einem der Ansprüche 1 bis 3, dadurch gekennzeichnet, dass der Unterteil (2) und der Deckel (3) im Neuzustand zusätzlich beabstandet vom Schnappscharnier (20) über Sollbruchstege (40) miteinander verbunden sind zur Bildung eines Originalitätsverschlusses.

5. Verschluss nach einem der Ansprüche 1 bis 4, dadurch gekennzeichnet, dass sowohl die Nebenbiegestellen (23, 24) als auch die Hauptbiegestelle (21) annähernd geradlinig sind.

6. Verschluss nach einem der Ansprüche 1 bis 5, dadurch gekennzeichnet, dass in den Unterteil (2) ein Einsatz (4) zum Aufsetzen auf den Behälterhals (6) eingesetzt ist, gegen welchen der Deckel (3) im geschlossenen Zustand abdichtet.

## Claims

1. Plastic closure for a container, particularly a bottle, comprising a base (2) for placing on a neck (6) of the container and a cap (3) connected in one piece thereto by means of a snap hinge (20), said snap hinge (20) having a main bending point (21) directly connecting the base (2) to the cap (3) and which defines the main rotation axis of the closure and has on either side of the main bending point (21) in each case an intermediate element (22), the intermediate elements (22) being connected by means of in each case a secondary bending point (23, 24) to the base (2) and the cover (3), characterized in that in the closed state of the closure both the main bending point (21) and all the secondary bending points (23, 24) are located in a surface (35, 35a, 35b, 35c) inclined inwards and upwards with respect to the main axis (17) of the base (2) and that the surface defined by the secondary bending points (23, 24) of the same intermediate element (22) is oblique both to the main bending point (21) and to the main axis (17) of the base (2).

2. Closure according to claim 1, characterized in that the surface (35, 35a, 35b, 35c) is approximately conical or pyramidal.

3. Closure according to claim 1 or 2, characterized in that in the closed state, considered in the axial direction of the closure, the outer contour of the cap (3) is entirely within the inner contour of the base (2).

4. Closure according to one of the claims 1 to 3, characterized in that the base (2) and the cap (3) in the new state are additionally interconnected by means of predetermined breaking tabs (40) spaced from the snap hinge (20) for the purpose of forming a tamper-proof closure.

5. Closure according to one of the claims 1 to 4, characterized in that both the secondary bending points (23, 24) and the main bending point (21) are approximately linear.

6. Closure according to one of the claims 1 to 5, characterized in that in the base (2) is inserted an insert (4) for placing on the container neck (6) against which the cap (3) is sealed in the closed state.

## Revendications

1. Dispositif de fermeture en matière plastique pour un récipient, notamment pour une bouteille, comportant une partie inférieure (2) destinée à être mise en place sur un goulot (6) du récipient (7), et un couvercle (3) relié d'un seul tenant au récipient par l'intermédiaire d'une charnière à encliquetage (20), et dans lequel la charnière à encliquetage (20) possède une zone de pliage principale (21), qui relie directement la partie inférieure (2) au couvercle (3) et qui définit l'axe principal de rotation du dispositif de fermeture et comporte des éléments intercalaires respectifs (22) des deux côtés de la zone de pliage principale (21), et dans lequel les éléments intermédiaires (22) sont reliés respectivement par l'intermédiaire d'une zone de pliage secondaire (23,24) à la partie inférieure (2) et au couvercle (3), caractérisé en ce que, lorsque le dispositif de fermeture est à l'état fermé, aussi bien la zone de pliage principale (21) que toutes les zones de pliage secondaires (23,24) sont disposées dans une surface (35;35a,35b,35c) inclinée vers le haut et vers l'intérieur par rapport à l'axe principal (17) de la partie inférieure (2), et que la surface, qui est définie par les zones de pliage secondaires (23,24) d'un même élément intermédiaire (22), est disposée obliquement aussi bien par rapport à la zone de pliage principale (21) que par rapport à l'axe principal (17) de la partie inférieure (2).

2. Dispositif de fermeture selon la revendication 1, caractérisé en ce que la surface (35;35a,35b,35c) possède approximativement la forme d'un cône ou d'une pyramide.

3. Dispositif de fermeture selon la revendication 1 ou 2, caractérisé en ce qu'à l'état fermé, le contour extérieur du couvercle (3) est situé complètement à l'intérieur du contour intérieur de la partie inférieure (2), lorsqu'on regarde dans la direction axiale de l'axe du dispositif de fermeture.

4. Dispositif de fermeture selon l'une des revendications 1 à 3, caractérisé en ce qu'à l'état neuf, la partie inférieure (2) et le couvercle (3) sont en outre reliés entre eux par l'intermédiaire de barrettes de rupture de consigne (40), à distance de la charnière d'encliquetage (20), pour former un dispositif de fermeture indiquant le caractère non violé.

5. Dispositif de fermeture selon l'une des revendications 1 à 4, caractérisé en ce qu'aussi bien les zones de pliage secondaires (23,24) que la zone de pliage principale (21) sont approximativement rectilignes.

6. Dispositif de fermeture selon l'une des revendications 1 à 5, caractérisé en ce que dans la partie inférieure (2) est inséré un insert (4) destiné à être mis en place sur le goulot (6) du récipient et contre lequel le couvercle (3) s'applique de façon étanche à l'état ferme.
